Europäisches Patentamt

European Patent Office

Office européen des brevets

(19)

(11) Publication number: **0 219 939**
**B1**

## EUROPEAN PATENT SPECIFICATION

(12)

(45) Date of publication of the patent specification:
**15.11.89**

(21) Application number: **86306366.5**

(22) Date of filing: **18.08.86**

(51) Int. Cl.⁴: **B62D 5/04**

(54) **Power-assisted rack and pinion steering gear.**

(30) Priority: **13.09.85  US 776128**

(43) Date of publication of application:
**29.04.87 Bulletin 87/18**

(45) Publication of the grant of the patent:
**15.11.89 Bulletin 89/46**

(84) Designated Contracting States:
**DE FR GB**

(56) References cited:
**EP-A- 0 133 003**
**US-A- 4 415 054**

(73) Proprietor: **GENERAL MOTORS CORPORATION,**
**General Motors Building 3044 West Grand Boulevard,**
**Detroit Michigan 48202(US)**

(72) Inventor: **Westercamp, Kenneth Lee, 9797 East Townline**
**Road, Frankenmuth Michigan 48734(US)**
Inventor: **Kurecka, Donald Joseph, 3114 Wintegreen**
**West, Saginaw Michigan 48603(US)**
Inventor: **Yeack, David Craig, 11120 Alscot Lane,**
**Whitehouse Ohio 43571(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

ACTORUM AG

## Description

This invention relates to a power-assisted rack and pinion steering gear for a vehicle as specified in the preamble of claim 1, for example as disclosed in EP-A O 133 003.

Prior to the present invention, various rack and pinion steering gears have incorporated electric power-assist motors for effectively reducing steering effort and improving driver comfort. One example of such a prior proposal forms the subject of US-A 4 415 054. Another example of such a prior proposal is disclosed in EP-A O 133 003. These prior designs, although providing good steering-assist benefits, are generally of a complex and bulky construction and are difficult to build and repair.

The prior designs further do not provide for central take-off as utilised in many vehicles, particularly in compact front-wheel drive vehicles requiring "high mount" of the steering gear to the front compartment cowling or other support structure.

The present invention is concerned with providing a power-assisted rack and pinion steering gear that is not subject to the said shortcomings.

To this end, a power-assisted rack and pinion steering gear in accordance with the present invention is characterised by the features specified in the characterising portion of claim 1.

The invention thereby makes available a new and improved low-profile rack and pinion steering gear having an electric drive motor disposed concentrically with respect to and at one end of a steering gear housing to drive a discrete ball nut and therefrom an actuator screw rack assembly, to provide electric power-assisted vehicle steering.

In contrast to the prior designs, the present invention makes it possible to utilise a discrete and substantially conventional ball nut for driving attachment to one end of the actuator screw-rack assembly for power-assist. These components can be made easily accessible, so as to be readily repairable or replaceable without the need for dismantling of the steering gear proper or the substantial teardown and rebuild of the steering gear.

The screw of the actuator screw-rack preferably strokes into the interior of the electric motor, to foreshorten the design, and for compactness and adaptability to a wide range of installations.

In a preferred embodiment of a power-assisted rack and pinion steering gear in accordance with the present invention, an electric drive motor is mounted concentrically at one end of a steering gear actuator screw-rack assembly, with a selectively reversible output which rotatably drives a discrete ball nut by way of spur gearing. A conventional ball nut screw forming part of the screw rack assembly and extending through the ball nut is linearly driven in response to powered rotation of the ball nut. This ball nut screw, telescoping from the interior of the electric motor into the rack housing, is drivingly connected to one end of an elongate rack forming the other part of the screw rack assembly. A toothed section of the rack meshes with a pinion gear that is rotatably driven from a steering shaft and a pinion shaft by means of a conventional steering wheel under the control of a vehicle operator. A control system is responsive to the direction and torque load of the mechanical steering input under the control of the vehicle operator to control the direction and output of the electric motor for effective power-assisted steering. With this design, a foreshortened and low profile is provided, preferably with a central take-off, for a wide range of applications with improved electrically driven power-assisted input by way of the usual tie rods operatively connected to the steerable wheels of the vehicle.

There are two distinct characteristics that distinguish such a power-assisted rack and pinion steering gear in accordance with the present invention from prior electric power steering systems. The first is a hollow-shaft electric motor that is concentrically mounted within the rack and pinion housing. The second is that the standard rack has been designed to provide a combination actuator screw-rack assembly with approximately one-half of its length provided with actuator ball threads and the other half provided with rack teeth. The actuator screw travels through the hollow output shaft of the electric motor, and the electric motor itself, which is designed as a reversible drive motor, is geared to a rotatable ball nut which is axially fixed in the housing. When the hollow motor shaft revolves, the ball nut is driven with a spinning motion and, by means of interconnecting ball trains, pushes the radially fixed actuator rack to the left or right, depending upon the direction of rotation of the motor.

A significant advantage of this design over the conventional electric power steering systems is the redistribution of the volume used by the unit. In many cases, the concentric end-motor design permits the installation of electric power steering in installations where an axially perpendicular motor or other one of the prior designs just would not fit into the vehicle.

In the drawing:

Figure I is a somewhat schematic front view showing a front portion of a power-assisted rack and pinion steering gear representing a preferred embodiment of the present invention; and

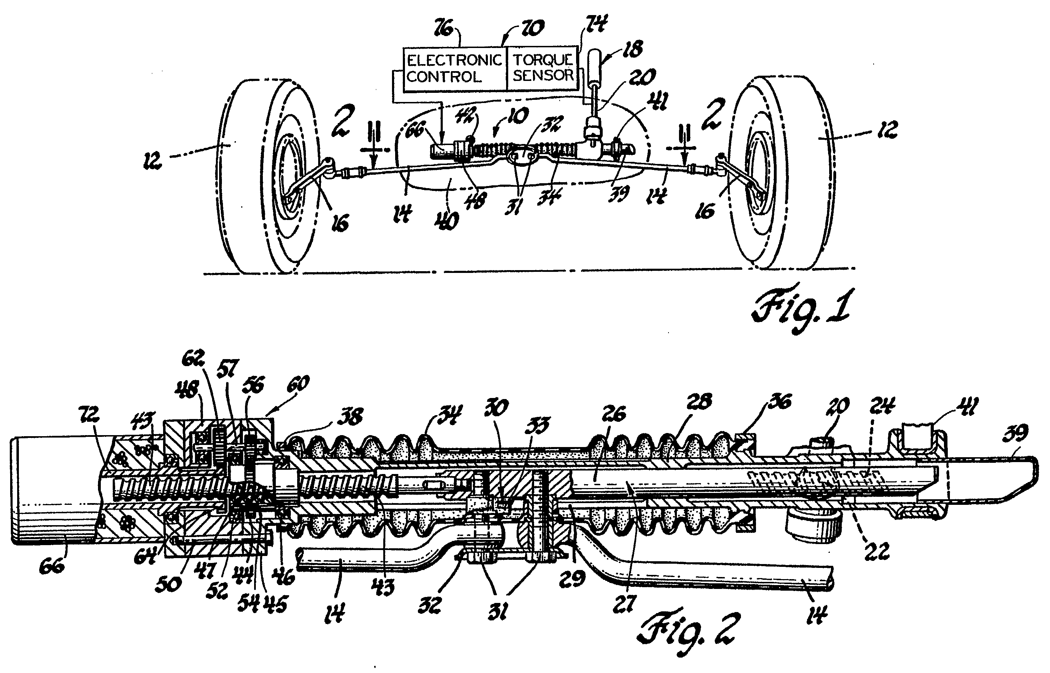

Figure 2 is an enlarged view partially in section of the power-assisted rack and pinion steering gear shown in Figure I.

With reference now to the drawing, there is shown in Figure I a rack and pinion steering gear 10 operatively connected to a pair of dirigible road wheels 12 by means of tie rod assemblies 14 and steering arms 16. The steering gear 10 receives a mechanical input by way of a steering shaft assembly 18 that incorporates a torsion bar 20 adapted to be turned by a vehicle operator by means of a conventional steering wheel, not shown. The steering shaft assembly 18 is drivingly connected to a pinion gear 22 the teeth of which mesh with teeth 24 of an elongate rack 26 forming part of a screw-rack assembly 27 that is mounted for linear sliding movement in a tubular steering gear housing 28 which is preferably made of a lightweight metal such as aluminium.

With this arrangement, rotation of the pinion gear 22 by the vehicle operator by way of the steering shaft assembly 18 will cause lateral sliding movement of the rack 26 to the left or right according to the direction of the steering input, to effect selective mechanical steering of the road wheels 12 with or without power assistance.

The steering gear housing 28 is formed with a generally rectilinear inner opening, the side walls of which form a track 29 for a rack guide assembly 30. The rack guide assembly 30 provides a slidable central take-off carriage operating with low friction in the track 29. The rack guide assembly 30, together with bolt members 31, forms a central take-off connection from the rack 26, and is coupled to the inboard ends of the tie rods 14. As is shown in Figure 2, the bolt members 31 project through a bolt support plate 32 and also through cylindrical steel bushings mounted in cylindrical openings in the body 33 of the rack guide assembly 30 and thence into threaded connection with the rack 26. An elongate convoluted boot 34 of elastomeric material stretches over the steering gear housing 28 from an end clamp 36 adjacent the pinion gear 22 to an end clamp 38 at the enlarged end of the housing. With this boot 34, and with an end cover 39 mounted in the left-hand end of the housing 28, the internal components are enclosed and protected from the outside environment.

If the operator input torque is sufficiently high, the torsion bar 20 will deflect in accordance with the amount of the input. A torque sensor will pick up the amount of deflection, to trigger electric power-assisted steering as will be described.

The gear housing 28 is, in this illustrative embodiment, secured in a high-mount position to a cowl 40 or other support structure of the vehicle by means of a left-hand bracket 41 and also by means of a threaded fastener 42 on the right-hand side. The right-hand end of the rack 26 is threadedly or otherwise connected to the end of an elongate screw 43 which forms the other part of the screw-rack assembly 27. The screw 43 extends axially through the housing and operatively through a ball nut 44 that is rotatably mounted within a large-diameter end portion 45 of the housing by means of an inboard ball-bearing assembly 46. The ball nut 44 and the screw 43 are drivingly interconnected by means of a conventional ball train 47, and form an assembly for translating rotational input movement into linear output movement.

A connector housing 48 secured to the large-diameter end portion 45 of the steering gear housing 28 by means of threaded fasteners 50 carries a ball-bearing assembly 52 which supports the ball nut 44 at its outboard end. The ball nut 44 has an external spur gear 54 secured to the outer periphery thereof that meshes with a small-diameter spur gear 56 mounted by means of a shaft 57 that is supported by bearings in the large-diameter end portion 45 of the gear housing 28 and the connector housing 48. The spur gear 56 is driven from the shaft 57 by means of a spur gear set 60 comprising meshing spur gears 62,64 mounted in the connector housing 48.

An electric motor 66 is secured to the outer end of the connector housing 48 by threaded fasteners, such as a fastener 50 as shown. This electric motor 66 is a reversible motor the output and direction of which are controlled by a control system 70 that is illustrated diagrammatically in Figure I. The electric motor 66 has a rotatable hollow output shaft 72 which extends into the connector housing 48 and telescopically receives the end of the screw 43 of the screw-rack assembly 27 as this end is linearly moved to the right in response to appropriate rotation of the ball nut 44.

This arrangement foreshortens the overall length of the power-assisted steering gear, and makes it more adaptable for a wide range of applications.

The output shaft 72 terminates in the spur gear 64, and the electric motor 66 can thereby be made to drive the ball nut 44 and screw 43 and the rack 26 attached thereto by way of the spur gearing at any selected torque and speed by appropriate selection of the spur gear diameters and numbers of teeth. The control system 70 includes a torque sensor 74 which is responsive to steering direction and effort from the torsion bar 20 as the torsion bar is deflected on steering input. This provides input to an electronic control 76 which suitably energises the electric motor in respect of both direction and output.

When mechanical steering effort is terminated by the vehicle operator ceasing to provide a manual steering input at the steering wheel, the torsion bar will no longer be deflected, and the geometry of the steering linkage will return the steerable wheels to the straight-ahead position.

The power-assisted rack and pinion steering gear which has been described thus provides in effect a new generation of effective electric power steering with central take-off capability as well as material space and weight savings with the small motor and the telescoping screw.

**Claims**

1. A power-assisted rack and pinion steering gear for steering the dirigible wheels of a vehicle, in which a steering gear rack (26) is disposed for linear movement within a housing (28), a pinion gear (22) operatively meshes with the rack (26) and is rotatable in response to a steering force input applied thereto by a vehicle operator to effect linear movement of the rack (26), connector means (30, 31) operatively connects the rack (26) to the dirigible wheels (12) of the vehicle for effecting steering movement of the wheels in response to the linear movement of the rack (26), a ball nut (44) is adapted to be rotationally driven by means of an electric motor (66) and thereby effect linear movement of the rack (26) in response to a predetermined mechanical steering force input applied to the pinion gear (22) by the vehicle operator, for providing power-assisted steering, the rack (26) includes a linearly movable screw portion (43) which extends through the ball nut (44) so that rotation of the ball nut (44) effects linear movement of the screw portion (43), and the electric motor (66) is formed with a hollow output shaft (72) within which the screw portion (43) is telescopically receivable, characterised in that the connector means (30, 31) is secured to the rack (26) between the ends thereof, the electric motor (66) is mounted to one end of the housing (28), the ball nut (44) is rotatably mounted between said one end of the housing (28) and the electric motor (66), said linearly movable screw portion (43) forms one end of the rack (26) and extends through said one end of the housing (28) into said hollow output shaft (72) of the electric motor (66), and gearing (54, 56, 60) is operatively connected to be driven by the hollow output shaft (72) of the electric motor (66) and is operatively connected to the ball nut (44) to effect the rotational driving thereof.

2. A power-assisted rack and pinion steering gear according to claim 1, in which the connector means (30, 31) is secured to a central portion of the rack (26), and the screw portion (43) of the rack (26) is removably connected with said one end of the rack (26).

3. A power-assisted rack and pinion steering gear according to claim 1 or 2, in which the ball nut (44) is rotatably mounted by bearing means (46) in said one end of the housing (28).

## Revendications

1. Direction assistée à pignon et crémaillère pour orienter les roues directrices d'un véhicule, dans lequel une crémaillère de direction (26) est disposée pour se déplacer linéairement à l'intérieur d'un carter (28), un pignon (22) engrène avec la crémaillère (26) et peut tourner en réponse à une entrée d'une force de direction qui lui est appliquée par un conducteur de véhicule pour assurer un déplacement linéaire de la crémaillère (26), des moyens de liaison (30, 31) relient activement la crémaillère (26) aux roues directrices (12) du véhicule pour assurer un mouvement d'orientation des roues en réponse au déplacement linéaire de la crémaillère (26), un écrou à billes (44) est adapté pour être entrainé en rotation au moyen d'un moteur électrique (66), et assure ainsi un déplacement linéaire de la crémaillère (26) en réponse à une force mécanique prédéterminée de direction appliquée en entrée au pignon (22) par le conducteur du véhicule, pour réaliser la direction assistée, la crémaillère (26) comprend une partie (43) formant vis, mobile linéairement, qui s'étend à travers l'écrou à billes (44) de sorte que la rotation de cet écrou assure un déplacement linéaire de la partie (43) formant vis, et le moteur électrique (66) comporte un arbre de sortie creux (72) à l'intérieur duquel la partie (43) formant vis est reçue de façon télescopique, caractérisée en ce que le dispositif de liaison (30, 31) est fixé sur la crémaillère (26) entre les extrémités de celle-ci, le moteur électrique (66) est monté sur une extrémité du boitier (28), l'écrou à billes (44) est monté rotatif entre ladite première extrémité du carter (28) et le moteur électrique (66), ladite partie (43) formant vis et mobile linéairement forme une extrémité de la crémaillère (26) et s'étend à travers ladite première extrémité du carter (28) dans ledit arbre de sortie creux (72) du moteur électrique (66), et des pignons (54, 66, 60) sont en liaison d'entrainement de façon à être entrainés par l'arbre de sortie creux (72) du moteur électrique (66) et sont en liaison d'entrainement avec l'écrou à billes (44) pour assurer l'entrainement de celui-ci en rotation.

2. Direction assistée à pignon et crémaillère suivant la revendication 1, dans laquell le dispositif de liaison (30, 31) est fixé sur une partie centrale de la crémaillère (26), et la partie (43) formant vis de la crémaillère (26) est reliée de façon amovible à ladite première extrémité de la crémaillère (26).

3. Direction assistée à pignon et crémaillère suivant les revendications 1 ou 2, dans laquelle l'écrou à billes (44) est monté rotatif par des roulements (46) dans ladite première extrémité du carter (28).

## Patentansprüche

1 Hilfskraftverstärkte Zahnstangenlenkung zum Lenken der richtbaren Räder eines Fahrzeuges, bei der eine Lenkgetriebezahnstange (26) linear bewegbar in einem Gehäuse (28) angeordnet ist, ein Zahnritzel (22) wirksam mit der Zahnstange (26) kämmt und in Abhängigkeit von einer daran durch einen Fahrer des Fahrzeuges angelegten Eingangslenkkraft drehbar ist, um eine Linearbewegung der Zahnstange (26) zu bewirken, Verbindermittel (30, 31) wirksam die Zahnstange (26) mit den richtbaren Rädern (12) des Fahrzeuges verbindet, um Lenkbewegung der Räder in Abhängigkeit von der Linearbewegung der Zahnstange (26) zu bewirken, eine Kugelmutter (44) ausgelegt ist, drehend mittels eines Elektromotors (66) angetrieben zu werden und dadurch Linearbewegung der Zahnstange (26) in Abhängigkeit von einer vorbestimmten mechanischen Lenkkrafteingabe zu bewirken, die durch den Fahrer des Fahrzeuges an das Zahnritzel (22) angelegt wird, um hilfskraftverstärkte Lenkung zu schaffen, die Zahnstange (26) einen linear bewegbaren Spindelabschnitt (43) enthält, der sich durch die Kugelmutter (44) so erstreckt, daß Drehung der Kugelmutter(44) Linearbewegung des Spindelabschnittes (43) bewirkt, und der Elektromotor (66) mit einer hohlen Abgabewelle (72) ausgebildet ist, innerhalb der der Spindelabschnitt (43) teleskopisch aufnehmbar ist, dadurch gekennzeichnet, daß das Verbindermittel (30, 31) an der Zahnstange (26) zwischen deren Enden sicher befestigt ist, daß der Elektromotor (66) an einem Ende des Gehäuses (28) angebracht ist, daß die Kugelmutter (44) drehbar zwischen dem einen Ende des Gehäuses (28) und dem Elektromotor (66) angebracht ist, daß der linear bewegbare Spindelabschnitt (43) ein Ende der Zahnstange (26) bildet und sich durch das eine Ende des Gehäuses (28) in die hohle Abgabewelle (72) des Elektromotors (66) erstreckt, und daß ein Getriebe (54, 56, 60) wirksam angeschlossen ist, durch die hohle Abgabewelle (72) des Elektromotors (66) angetrieben zu werden und wirksam mit der Kugelmutter (44) verbunden ist, um den Drehantrieb derselben zu bewirken.

2. Hilfskraftverstärkte Zahnstangenlenkung nach Anspruch 1, bei der das Verbindermittel (30, 31) an einem zentralen Abschnitt der Zahnstange (26) gesichert und der Spindelabschnitt (43) der Zahnstange (26) lösbar mit dem einen Ende der Zahnstange (26) verbunden ist.

3 Hilfskraftverstärkte Zahnstangenlenkung nach Anspruch 1 oder 2, bei der die Kugelmutter (44) in dem einen Ende des Gehäuses (28) durch Lagermittel (46) drehbar angebracht ist.

Fig. 1

ELECTRONIC CONTROL

TORQUE SENSOR

Fig. 2